# EUROPEAN PATENT SPECIFICATION

(11) **EP 0 362 366 B1**
(45) Date of publication and mention of the grant of the patent: **13.09.1995**
(21) Application number: 89904977.9
(22) Date of filing: 30.03.1989
(51) Int. Cl.: G06F 9/34, G06F 9/44, G06F 9/38

(54) **INSTRUCTION CACHE FLUSH-ON-REI CONTROL**
BEFEHLSCACHESPEICHER MIT FLUSH-ON-REI-STEUERUNG
COMMANDE "FLUSH-ON-REI" D'ANTEMEMOIRE D'INSTRUCTION

(30) Priority: 01.04.1988 US 176728
(43) Date of publication of application: 11.04.1990
(73) Proprietor: DIGITAL EQUIPMENT CORPORATION, Maynard Massachusetts 01754-1418 (US)
(72) Inventor: RAMANUJAN, Raj, Kannan, Leominster, MA 01453 (US); BANNON, Peter, Joseph, Acton, MA 01720 (US); STEELY, Simon, Carl, Jr., Hudson, NH 03051 (US)
(74) Representative: Betten, Jürgen, Dipl.-Ing.
(86) International application number: US8901311
(87) International publication number: WO8909442

(56) References cited:
- EP-A- 0 156 307
- US-A- 3 979 726
- US-A- 4 208 716
- US-A- 4 426 682
- US-A- 4 701 844

## Description

### Field of the Invention

The present invention relates to the field of digital computers and their architecture. More particularly, it relates to cache memories used in computer systems.

### Background of the Invention

Some central processing units (CPUs) with high operating speeds require memory devices with extremely rapid access and retrieval characteristics. Memories which fulfill these requirements include small storage capacity, exceedingly fast access and retrieval random access memories (RAMs), commonly known as cache memories. The caches are used to store data and instructions which the CPU requires immediately. A larger, main memory stores the remaining portion of the currently running programs and supplies both the CPU and the cache memories with data and instructions which cannot be stored within the small cache memories. This system of memory hierarchy, with the fastest memories most closely linked to the CPU, has enabled computer systems to achieve very high operational speeds.

One known implementation of cache memories uses two separate caches, a data cache and an instruction cache, for supporting CPU operations - one cache supporting data operations and the other supporting instruction operations. This arrangement increases the computer's operating speed, but raises the possibility that data will be changed or updated in the data cache while it is also contained in the instruction cache. This can result in improper instructions being executed. The term "improper" is used to denote instructions that have not been updated.

It is an object of this invention to insure synchronism between the contents of separate data and instruction caches with a minimum amount of clearing of either cache.

### Summary of the Invention

These objects and others are fulfilled by the present invention as claimed in claims 1 and 3 wherein a memory store of the addresses contained in the instruction cache is maintained. When data is written to the data cache, a comparison is made between the contents of the address store and the new data. If there is a match, the next time an instruction called Return-from-Exception-or-Interrupt is executed (REI), the instruction cache is cleared. In this manner, the instruction cache is only cleared when there is a chance that a stale instruction will be executed. Advantageously, the present invention uses an instruction which already exists in the system.

These and other objects and advantages of the invention will appear more clearly from the following specification in connection with the accompanying drawings, in which:

### Brief Description of the Drawings

- FIG. 1: shows a block diagram of a computer system which uses the present invention; and
- FIG. 2: is a block diagram of a cache memory unit of the computer system of Fig. 1.

### Detailed Description

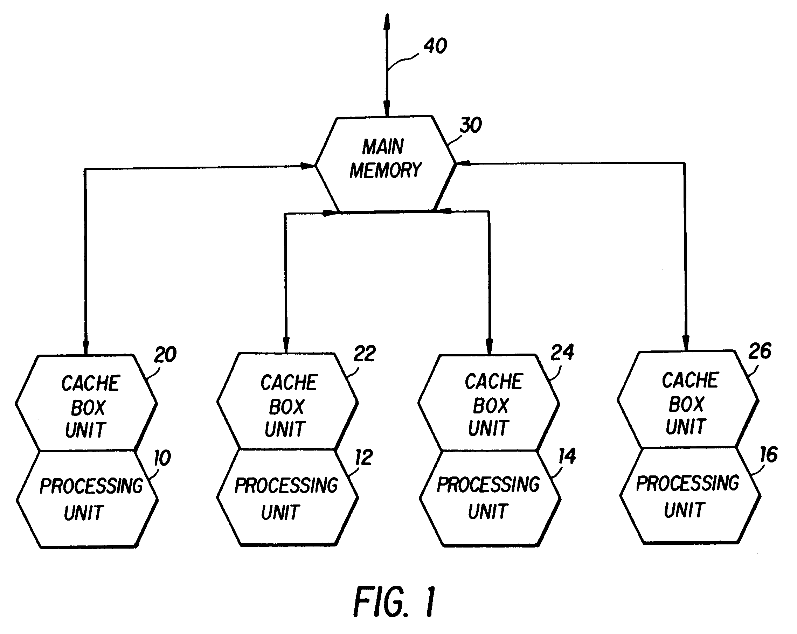

The overall operating environment of the present invention is shown in FIG. 1, where a multiprocessor computer system 1 is depicted. A plurality of processing units, in this embodiment four, numbered respectively 10,12, 14 and 16 are connected to cache memory units numbered 20, 22, 24 and 26. The cache memory units 20, 22, 24, 26 receive and transmit data to main memory 30. Finally, main memory 30 receives and transmits data to various input/output devices (not shown) over input/output bus 40.

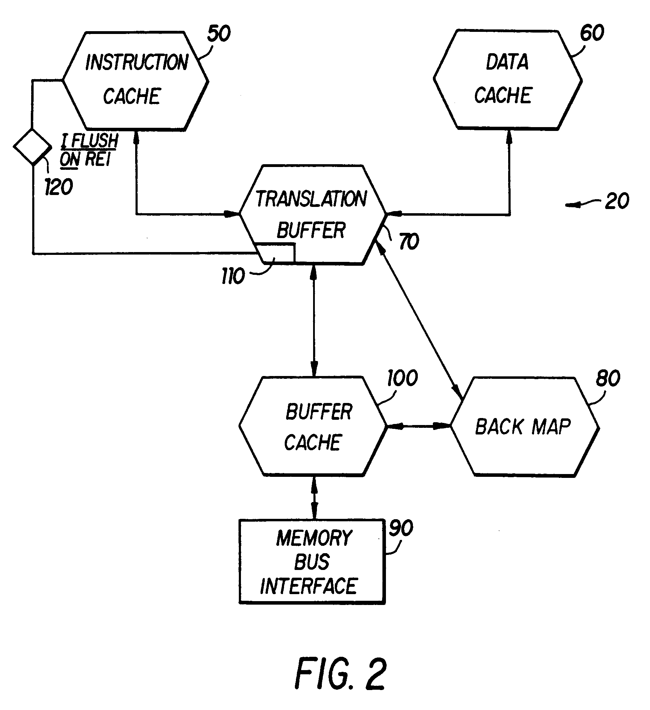

A single cache memory unit will be described in terms of its functional components, as seen in FIG. 2. Here, cache memory unit 20 is broken down into instruction cache 50, data cache 60, translation buffer 70, backmap 80, memory bus interface 90, buffer cache 100 and I-cache PA tag store 110. It should be noted that these components need not be contained within a single monolithic unit. Rather, the components can be located on a plurality of modules and circuit boards. As their functions are so closely interrelated, however, they are treated as a unit for purposes of discussion.

The data cache 60 is a 4 kByte, direct mapped, virtually addressed cache and is used for reading and writing data stream data. Its access time is on the order of 1 cycle.

Instruction cache 50 is also a 4 kByte, direct mapped, virtually addressed cache with virtual address tags. It is used to fetch instructions to be put in the instruction stream and has a 1 cycle access time.

Both instruction cache 50 and data cache 60 are connected to Translation Buffer 70. Translation buffer 70 is direct mapped and contains 4k entries divided evenly between process and system space. It is used to translate virtual addresses to physical addresses for all data cache references and for instruction cache misses. It also stores physical tags for all instruction cache entries.

Coupled to translation buffer 70 is the buffer cache 100. Buffer cache 100 is 1 MByte in size, direct mapped, and physically addressed with an access time of 4 cycles. Buffer cache 100 is much larger than either instruction cache 50 or data cache 60 and the system is arranged so that the contents of the two smaller caches are always a proper subset of the larger one. Thus, when an invalidate or other request is received from Memory Bus Interface 90, if the data or instruction cannot be found in buffer cache 100 there is no need to check for its presence in either the instruction or data caches 50, 60.

Backmap 80 is also coupled to the translation buffer 70 and is used to prevent synonyms in the data cache. The definition of synonyms in this context is two virtual addresses which have the same physical address.

Instructions tend to be used sequentially. In other words, if the first instruction in a long program is used it is very likely that the next instruction in the program will also be required. Consequently, instructions are generally prefetched and put into a pipeline for use by the CPU.

With two caches, the possibility exists that the same data might appear in both caches, and a write occurs to the data cache 60 to change this data. In this situation, improper data could be unintentionally processed. To send the new data to data cache 60 and simultaneously update the instruction cache 50 with that data is not practical, as it would slow the system's speed of operation too much and would also be expensive in terms of hardware.

It was contemplated to flush the instruction cache 50 every time a write to the data cache 60 occurs and the same data was present in the instruction cache 50. A known microcode instruction already in use is called Return from Exception or Interrupt (REI) that has the property of synchronizing the instruction stream and instruction stream traffic by purging the pipeline of instructions which have already been taken from the instruction cache. This instruction is described in the "Vax Architecture Handbook", 1986, p. 9-56, herein incorporated by reference. By requiring that an REI be executed after a write to the data cache and before execution of the modified instruction stream, it is assured that no stale instructions are executed. By flushing the instruction cache 50 (along with the pipeline) upon an REI command, the possibility of executing improper instructions is completely eliminated. However this method would result in flushing the instruction cache 50 too frequently, even when such action was not truly necessary and thereby slow the system down.

In order to minimize the number of times that the instruction cache 50 is flushed, but still maintain the proper data, the present invention provides a tag store 110 of physical addresses for every block of data contained in the instruction cache 50. The tag store 110 is associated with the translation buffer 70. The tags indicate all the physical addresses of the data in the instruction cache 50.

When data is placed in the data stream its physical address tag is compared to the tag store in the translation buffer 70. If a match occurs this indicates that the data contained in one of the addresses referred to by the instruction cache 50 is being changed or written over by new data. The occurrence of a match sets a hardware bit called the I-CACHE-FLUSH-ON-REI flag 120. When this flag is on, it indicates that the next time an REI instruction is executed, instruction cache 50 should be flushed. If the flag is not set when an REI is executed, the instruction cache 50 will not be flushed. In this manner, the cache is only flushed when the contents of the instruction cache 50 is actually changed. It should be remembered that the look-ahead/pipeline traffic in the instruction stream is also cleared by the REI instruction, thereby assuring synchronicity between the instruction and data caches. Finally, when instruction cache 50 is flushed, the I-CACHE-FLUSH-ON REI bit is also cleared, allowing for the next occurrence of the same situation.

In an alternative embodiment, each block in instruction cache 50 will have a separate and distinct I-CACHE-FLUSH-ON-REI flag 120. In this embodiment, when a write occurs, the address of the write will be compared to all of the addresses of the data blocks in the instruction cache 50. If a match occurs, the flag for that particular address block will be set.

However, whenever an instruction cache block is replaced or modified, the corresponding flag, if it is set, can be cleared as the instruction cache will no longer contain the block that has changed.

In this instance it is possible that a flag for a particular block could be set, the particular "flagged" block could then be displaced or changed, thus clearing the flag as the instruction cache would not contain the changed block and, when a subsequent REI instruction occurred, no flags would be set so the instruction cache would not be flushed. This approach increases the system's overhead by requiring additional flags for each separate data block stored in the instruction cache. However, this disadvantage is compensated for by reducing the number of instruction cache flushes.

Two further alternatives are possible with this approach. First, if an REI instruction is executed, and any flag is on, the entire instruction cache can be flushed. Second, only the blocks which are flagged could be flushed, leaving the remainder of the blocks untouched.

The present invention reduces the number of instruction cache flushes by a very large percentage in comparison with the other mentioned methods, thereby increasing the system's speed of operation in a significant manner. In tests, the overall occurrence of instruction cache flushes has been reduced by 99% using the present invention.

## Claims

1. A method for synchronizing data and instructions in a computer having the following:
a translation buffer;
a direct mapped and virtually addressed instruction cache and a direct mapped and virtually addressed data cache, said instruction cache and said data cache having virtual address tags and are coupled to said translation buffer, and
a Return from Exception of Interrupt command;
said method characterized by the steps of:
storing addresses in a tag store of each block contained in the instruction cache;
comparing said stored addresses with adresses of data being written to said data cache;
setting an indicator if a match of said addresses is detected in said comparing step; and
clearing said instruction cache when said indicator is set and during execution of said Return from Exception or Interrupt.

2. The method of claim 1, wherein the indicator comprises a flag for each said block contained in the instruction cache, and wherein the step of clearing said instruction cache includes clearing individual blocks in accordance with the flags for the individual blocks.

3. An apparatus for insuring synchronism between at least two caches of a computer, said caches being direct mapped and virtually addressed and having virtual address tags and are coupled to means for translating virtual addresses to physical address for said caches, the apparatus comprising means for returning from exceptions or interrupts;
said apparatus characterized by:
means for storing addresses referred to by said caches;
means for comparing addresses in the means for storing, with addresses where information is being written to in at least one of said caches;
means for setting a flag when a match of said addresses occurs; and
means for clearing said caches when said flag is set and said means for returning has returned from an exception or interrupt.

## Patentansprüche

1. Verfahren zum Synchronisieren von Daten und Befehlen in einem Computer, der folgendes aufweist:
einen Übersetzungspuffer;
einen direkt zugeordneten und virtuell adressierten Befehls-Cache-Speicher und ein direkt zugeordneter und virtuell adressierter Daten-Cache-Speicher, wobei der Befehls-Cache-Speicher und der Daten-Cache-Speicher virtuelle Adressen-Merker enthalten und mit dem Übersetzungspuffer verbunden sind, und
ein Zurück-von-der-Ausnahme-des-Unterbrechungsbefehls;
wobei das Verfahren durch die Schritte gekennzeichnet ist:
Speicherung von Adressen in einem Merker-Speicher von jedem Block, der in dem Befehls-Cache-Speicher enthalten ist;
Vergleichen der gespeicherten Adressen mit den Adressen der Daten, die in den Daten-Cache-Speicher geschrieben worden sind;
Setzen eines Anzeigers, wenn bei dem Vergleichsschritt eine Übereinstimmung der Adressen festgestellt wurde; und
Löschen des Befehls-Cache-Speichers, wenn der Anzeiger gesetzt wurde und während der Ausführung des Zurück-von-der-Ausnahme-oder-Unterbrechung.

2. Verfahren nach Anspruch 1, wobei der Anzeiger einen Merker für jeden in dem Befehls-Cache-Speicher enthaltenen Block beinhaltet, und wobei der Schritt des Löschens des Befehls-Cache-Speichers das Löschen einzelner Blocks entsprechend der Merker für die einzelnen Blocks beinhaltet.

3. Vorrichtung zum Sicherstellen von Synchronismus zwischen zumindest zwei Cache-Speichern eines Computers, wobei die Cache-Speicher direkt zugeordnet und virtuell adressiert sind, virtuelle Adreß-Merker haben und mit der Einrichtung zum Übersetzen virtueller Adressen in physikalische Adressen für die Cache-Speicher verbunden sind, wobei die Vorrichtung eine Einrichtung zur Rückkehr von Ausnahmen oder Unterbrechungen hat;
wobei die Vorrichtung gekennzeichnet ist durch:
eine Einrichtung zum Speichern von auf die Cache-Speicher bezogenen Adressen;
eine Einrichtung zum Vergleichen von Adressen in der Speichereinrichtung mit Adressen in mindestens einem der Cache-Speicher, an die Informationen geschrieben werden;
eine Einrichtung zum Setzen eines Merkers, wenn eine Übereinstimmung der Adressen auftritt; und
eine Einrichtung zum Löschen der Cache-Speicher, wenn der Merker gesetzt wird und die Einrichtung zur Rückkehr von einer Ausnahme oder Unterbrechung zurückgekehrt ist.

## Revendications

1. Méthode pour synchroniser des données et des instructions dans un ordinateur comportant les dispositifs suivants :
un tampon de traduction;
une antémémoire d'instructions à mise en correspondance directe et à adressage virtuel et une antémémoire de données à mise en correspondance directe et à adressage virtuel, ladite antémémoire d'instructions et ladite antémémoire de données possédant des repères d'adresses virtuelles et étant reliées audit tampon de traduction, et
une commande de Reprise après Exception ou Interruption;
ladite méthode étant caractérisée par les étapes qui consistent à :
mémoriser des adresses dans une mémoire de repères de chaque bloc contenu dans l'antémémoire d'instructions;
comparer lesdites adresses mémorisées avec des adresses de données en cours d'inscription dans ladite antémémoire de données;
poser un indicateur si une correspondance entre lesdites adresses est détectée au cours de ladite étape de comparaison; et
effacer ladite antémémoire d'instructions lorsque ledit indicateur est posé et pendant l'exécution de ladite Reprise après Exception ou Interruption.

2. Méthode selon la revendication 1, suivant laquelle l'indicateur comprend un drapeau pour chacun desdits blocs contenus dans l'antémémoire d'instructions, et suivant laquelle l'étape d'effacement de ladite antémémoire d'instructions comprend l'effacement de blocs individuels en fonction des drapeaux correspondant aux blocs individuels.

3. Appareil pour assurer un synchronisme entre au moins deux antémémoires d'un ordinateur, lesquelles antémémoires sont à mise en correspondance directe et à adressage virtuel, possèdent des repères d'adresses virtuelles et sont reliées à des moyens destinés à traduire des adresses virtuelles en adresses physiques pour lesdites antémémoires, l'appareil comprenant des moyens destinés à exécuter une reprise après des exceptions ou des interruptions;
ledit appareil étant caractérisé par :
des moyens pour mémoriser des adresses auxquelles lesdites antémémoires font référence;
des moyens pour comparer des adresses contenues dans les moyens de mémorisation avec des adresses auxquelles des informations sont en cours d'inscription dans l'une au moins desdites antémémoires;
des moyens pour poser un drapeau lorsqu'une correspondance entre lesdites adresses a lieu; et
des moyens pour effacer lesdites antémémoires lorsque ledit drapeau est posé et que lesdits moyens destinés à exécuter une reprise après une exception ou une interruption ont exécuté ladite reprise.
